# EUROPÄISCHE PATENTSCHRIFT

(11) **EP 2 979 063 B1**
(45) Veröffentlichungstag und Bekanntmachung des Hinweises auf die Patenterteilung: **09.12.2020**
(21) Anmeldenummer: 14701368.4
(22) Anmeldetag: 24.01.2014
(51) Int. Cl.: G01D 5/04, G01D 5/244, B65C 9/04, B65C 9/06, B65C 9/40

(54) **RUNDLÄUFERMASCHINE ZUR BEHÄLTERBEHANDLUNG MIT DREHGEBER**
ROTARY TABLE MACHINE FOR CONTAINER TREATMENT WITH ROTARY TRANSDUCER
MACHINE ROTATIVE DE TRAITEMENT DE RÉCIPIENTS MUNIE D'UN CODEUR ROTATIF

(30) Priorität: 27.03.2013 DE 102013205398
(43) Veröffentlichungstag der Anmeldung: 03.02.2016
(73) Patentinhaber: KRONES Aktiengesellschaft, 93073 Neutraubling (DE)
(72) Erfinder: GERTLOWSKI, Georg, 93073 Neutraubling (DE); HASLER, Uwe, 93073 Neutraubling (DE); SCHNEIDER, Helmut, 93073 Neutraubling (DE); TRIEBEL, Jörg, 93073 Neutraubling (DE)
(74) Vertreter: Grünecker Patent- und Rechtsanwälte PartG mbB
(86) Internationale Anmeldenummer: PCT/EP2014/051364
(87) Internationale Veröffentlichungsnummer: WO 2014/154378

(56) Entgegenhaltungen:
- EP-A1- 1 864 910
- WO-A1-01/05590
- DE-A1-102011 003 061
- US-A- 5 259 913

## Beschreibung

Die Erfindung betrifft eine Rundläufermaschine zur Behälterbehandlung mit den Merkmalen des Oberbegriffs von Patentanspruch 1 und ein Verfahren für eine Rundläufermaschine mit den Merkmalen des Oberbegriffs von Patentanspruch 13.

Rundläufermaschinen zur Behälterbehandlung sind üblicherweise als Streckblasmaschine, Rinser, Füller, Verschliesser, Inspektionsmaschine, Etikettierer und/oder Bedruckungsmaschine für Behälter ausgebildet. Dabei werden die Behälter, wie beispielsweise Flaschen oder Dosen, in einem Karussell in Behälteraufnahmen aufgenommen und von diesen gefördert. Um eine hohe Präzision bei der Behandlung zu erreichen, muss dabei während der Drehung des Karussells die Position der Behälteraufnahmen mit hoher Präzision bestimmt werden.

Die Behälteraufnahmen sind dabei auf dem Karussell entlang einer Kreisbahn um die Drehachse mit einer Maschinenteilung regelmäßig beabstandet angeordnet. Beispielsweise sind bei einer Etikettiermaschine etwa 70 Behälteraufnahmen an dem Karussell angeordnet, mit denen die Behälter aufgenommen werden und die zusätzlich zur Drehung des Karussells mittels eines Servomotors um ihre eigene Achse schwenkbar sind. Dadurch kann jeder Behälter gegenüber einem Etikettieraggregat so geschwenkt werden, dass das Etikett am gesamten Behälterumfang aufgebracht werden kann. Für eine genaue Positionierung des Etiketts muss dabei die Position des Karussells und damit die der Behälteraufnahmen gegenüber dem Etikettieraggregat genau bekannt sein.

Die DE 69411 178 T2 offenbart ein Karussell mit Behälteraufnahmen und einer Welle, wobei in ein zentrales Zahnrad an der Welle ein Motor mit einem Antriebszahnrad eingreift. Darüber hinaus wird zusätzlich der Drehgeber über das zentrale Zahnrad angetrieben, mit dem dann die Position des Karussells bestimmt werden kann.

Die DE 10 2004 055 745 A1 offenbart ebenfalls eine Rundläufermaschine mit einem Karussell und einer Welle, wobei hier der Drehgeber zentral an der Welle angeordnet ist.

Die US 5,259,913 offenbart eine kontinuierlich arbeitende Rundläufermaschine und ein Verfahren zur Etikettierung. Dabei wird einerseits mit einem Encoder die Position des Karussells und andererseits mit einem Sensor die Position der darauf angeordneten Behälteraufnahmen erfasst. Dadurch wird die Drehung der Behälteraufnahmen gegenüber dem Karussell mit einem Servomotor zu geregelt.

Die WO 01/05590 A offenbart ein computergesteuertes Etikettiersystem, bei dem mit einem Encoder die Position eines Flaschentisches erfasst und darüber ein Etikettenband in einem Etikettieraggregat gesteuert wird.

Die DE 10 2011 003 061 A1 offenbart ein Verfahren und eine Maschine zum Etikettieren von Behältnissen, bei dem der Abstand zwischen einzelnen Drehtellern auf dem Karussell mit einer Sensoreinheit ermittelt und beim Etikettieren berücksichtigt wird.

Die EP 1 864 910 A1 offenbart eine Rundläufermaschine zum Etikettieren, bei der ein optischer Encoder über einen Getriebemechanismus mit der Karussellwelle verbunden ist, so dass er gleichmäßig beabstandete Werteinkremente über eine Umdrehung der Karussellwelle ausgibt.

Bei derartigen Rundläufermaschinen hat sich gezeigt, dass die Behälterbehandlung, wie beispielsweise eine Etikettierung, nur mit unzureichender Genauigkeit gewährleistet werden kann.

Aufgabe der Erfindung ist es, eine Rundläufermaschine bereitzustellen, die eine präzisere Behälterbehandlung erlaubt.

Zur Lösung der Aufgabenstellung stellt die Erfindung eine Rundläufermaschine zur Behälterbehandlung nach Anspruch 1 bereit. Vorteilhafte Ausführungsformen der Erfindung sind in den abhängigen Ansprüchen genannt.

Dadurch, dass das Karussell und der Drehgeber über ein Getriebe derart verbunden sind, dass bei einer Drehung des Karussells um eine Maschinenteilung der Drehgeber als Positionssignal ein ganzzahliges Vielfaches eines periodischen Werteinkrements ausgibt und/oder verarbeitet, wird bei der Drehung des Karussells um die Maschinenteilung eine Sequenz mit einem ganzzahligen Vielfachen des periodischen Werteinkrements als Positionssignal ausgegeben. Beispielsweise können dies 5000 Perioden des Werteinkrements sein. Bei einer weiteren Drehung des Karussells um die Maschinenteilung wird die gleiche Sequenz von periodischen Werteinkrementen ausgegeben. Bei einer Anordnung von beispielsweise 60 Behälteraufnahmen entlang der Kreisbahn beträgt eine Maschinenteilung genau 6°. Innerhalb dieser Maschinenteilung kann dann die Position der Behälteraufnahmen bei 5000 Werteinkrementen pro Maschinenteilung mit 0,0012° aufgelöst werden. Anders ausgedrückt, ist durch die Getriebeübersetzung eine besonders hohe Auflösung der Position des Karussells möglich.

Dadurch, dass Signalgeber zur Erfassung einer Referenzmarke am Karussell und zur Ausgabe eines darauf basierenden Referenzmarkensignals ausgebildet ist, kann die Referenzmarke oder eine damit korrespondierende Referenzbehälteraufnahme als Nullposition des Karussells bestimmt werden. In der Folge ist über den regelmäßigen Abstand der Behälteraufnahmen bestimmbar, an welcher Position sich jede einzelne Behälteraufnahme am Karussell befindet. Dadurch kann beispielsweise jede einzelne Behälteraufnahme mit einer Behandlungsstation genau korreliert werden und die Schwenkung der Behälteraufnahmen entsprechend ihrer Positionen angesteuert werden.

Dadurch, dass die Signalverarbeitungseinrichtung zur Verarbeitung des Positionssignals und des Referenzmarkensignals ausgebildet ist, um die Position des Karussells zu regeln und die Behälteraufnahmen zu steuern, wird sowohl die Position des Karussells als auch die Bewegung der Behälteraufnahmen basierend auf diesen Signalen geregelt bzw. besteuert. Dadurch werden Schwankungen zwischen der Karusselldrehung und der Positionsbestimmung der Behälteraufnahmen vermieden. Dementsprechend wird eine hohe Genauigkeit der Behälterbehandlung erreicht.

Die Rundläufermaschine zur Behälterbehandlung kann in einer Getränkeverarbeitungsanlage angeordnet sein. Die Rundläufermaschine kann eine Streckblas-, Reinigungs-, Etikettier-, Inspektions-, Befüllungs- oder Verschließmaschine für Behälter sein. Die Behälter können Flaschen, Dosen, Becher oder dergleichen sein. Die Behälteraufnahmen können um ihre eigene Achse drehbar ausgebildet sein. Eine Steuerkurve oder Servomotoren können dazu ausgebildet sein, die Behälteraufnahmen um ihre eigenen Achsen zu drehen. Die Behälteraufnahmen können Spannelemente aufweisen, um die Behälter darin lagefest aufzunehmen.

Die Maschinenteilung kann 360° geteilt durch die Anzahl der Behälteraufnahmen am Karussell sein. Beispielsweise ist die Maschinenteilung bei 60 Behälteraufnahmen entlang der Kreisbahn 6°.

Die Drehachse des Karussells kann senkrecht durch die Mitte des Karussells verlaufen. Das Karussell kann eine Welle entlang der Drehachse aufweisen. Die Drehachse des Karussells kann vertikal verlaufen. Die Welle des Karussells kann über eine Lagerung in Rahmenelementen gelagert sein. Das Karussell kann zum Antrieb mit einem Motor verbunden sein.

Der Drehgeber kann ein optischer, induktiver oder magnetischer Drehgeber sein. Der induktive Drehgeber kann als Tachogenerator oder Resolver ausgebildet sein. Der Drehgeber kann pro Umdrehung als Positionssignal ein ganzzahliges Vielfaches der periodischen Werteinkremente als Impulsfolge ausgeben. Das Positionssignal kann ein periodisches Rechteck- oder ein Sinussignal sein. Alternativ kann der Drehgeber dazu ausgebildet sein, das Positionssignal zu verarbeiten und als Positionswert auszugeben. Die Ausgabe des Positionswerts kann über einen Datenbus erfolgen. Der Drehgeber kann ein Absolutwertdrehgeber (SSI-Drehgeber) oder ein Inkrementaldrehgeber sein.

Die Referenzmarke kann an einem äußeren Umfang des Karussells angeordnet sein. Die Referenzmarke kann einen Magneten oder eine optische Marke umfassen. Der Signalgeber kann einen Magnetschalter oder eine Fotozelle zur Erkennung der Referenzmarke umfassen.

Die Signalverarbeitungseinrichtung kann einen Mikroprozessor, digitale Ein- und/oder Ausgänge, analoge Ein- und/oder Ausgänge umfassen, die optional dazu ausgebildet sind, das Positionssignal und/oder das Referenzmarkensignal einzulesen.

Die Signalverarbeitungseinrichtung kann mit dem Motor zum Antrieb des Karussells und/oder mit Servomotoren zur Schwenkung der Behälteraufnahmen verbunden sein. Die Signalverarbeitungseinrichtung kann eine Regelschleife umfassen, um die Position des Karussells basierend auf dem Positionssignal zu regeln. Die Signalverarbeitungseinrichtung kann dazu ausgebildet sein, die Behälteraufnahmen in Abhängigkeit von dem Positionssignal zu steuern. Die Signalverarbeitungseinrichtung kann dazu ausgebildet sein, die Servomotoren der Behälteraufnahmen mit einer Regelschleife auf Basis von Schwenkwinkeln der Behälteraufnahmen zu regeln. Die Behälteraufnahmen oder die Servomotoren können zur Erfassung der Schwenkwinkel Drehgeber umfassen.

Die Signalverarbeitungseinrichtung kann zur Verarbeitung des Positionssignals ausgebildet sein, um ein Aggregat zur Behälterbehandlung zu steuern. Dadurch kann mit dem Positionssignal und dem Referenzmarkensignal zusätzlich das Aggregat gesteuert werden und die Präzision der Behälterbehandlung erhöht werden. Das Aggregat kann eine Füllstation, ein Etikettieraggregat, ein Inspektionsaggregat und/oder ein Verschließkopf sein. Beispielsweise kann bei einem Etikettieraggregat die Etikettierung basierend auf dem Positionssignal und dem Referenzmarkensignal mit der Drehung des Karussells besonders gut synchronisiert werden, da für alle Antriebe die gleiche Zeitbasis gilt. Die Signalverarbeitungseinrichtung und das Aggregat können mit einer Steuerleitung verbunden sein.

Ein Nullpunkt des Positionssignals kann frei wählbar sein. Dadurch ist bei einer Inbetriebnahme oder einer Wartung eine definierte Position des Karussells in der Rundläufermaschine abspeicherbar. Der Nullpunkt kann im Drehgeber oder in der Signalverarbeitungseinrichtung abgespeichert werden. Flanken des Positionssignals können als Nullpunkt wählbar sein.

Das Getriebe kann ein derartiges Untersetzungsverhältnis aufweisen, dass sich bei einer Drehung des Karussells um eine Maschinenteilung eine Welle des Drehgebers um eine, zwei, vier oder eine halbe oder eine viertel Umdrehung dreht. Dadurch kann besonders einfach gewährleistet werden, dass bei einer Drehung des Karussells um eine Maschinenteilung das Positionssignal ein ganzzahliges Vielfaches des periodischen Werteinkrements überstreicht.

Das Getriebe kann einen Zahnriemen mit abgerundeten Zähnen aufweisen. Dadurch wird eine besonders hohe Laufruhe des Drehgebers erzielt, da die abgerundeten Zähne besonders leichtgängig in ein Zahnrad eingreifen können. Das Getriebe kann wenigstens zwei Zahnräder umfassen, die über den Zahnriemen verbunden sind, wobei die Zahnräder gleiche oder verschiedene Durchmesser aufweisen. Die Zahnräder können zum Zahnriemen korrespondierende Zähne aufweisen. Der Zahnriemen kann Zahnflanken aufweisen, die gegenüber der Laufrichtung des Zahnriemens schräg angeordnet sind. Dadurch können die Zähne noch leichter in die Zahnräder eingreifen. Der Zahnriemen kann aus einem Kunststoffmaterial bestehen. Die Spannung des Zahnriemens kann mit einer Spannrolle aufgebracht sein.

Das Getriebe kann ein Motorgetriebe umfassen, das an einer Antriebsseite mit einem Motor zur Einleitung einer Antriebskraft gekoppelt ist und das an einer Abriebseite zwischen dem Drehgeber und dem Karussell angeordnet ist. Dadurch können die Kräfte und Drehmomente zwischen dem Motorgetriebe und dem Karussell besonders gut vom Drehgeber entkoppelt werden. Hierdurch wird eine besonders hohe Laufruhe des Drehgebers gewährleistet. Das Motorgetriebe kann zwei Abtriebsseiten umfassen, wobei die erste Abtriebsseite über wenigstens zwei Zahnräder mit dem Karussell verbunden ist und die zweite Abtriebsseite über wenigstens zwei andere Zahnräder mit dem Drehgeber. Die beiden Abtriebsseiten können die beiden Enden einer Welle sein.

Der Zahnriemen kann zwischen dem Motorgetriebe und dem Drehgeber angeordnet sein. Dadurch ist der Zahnriemen von den Antriebskräften besonders gut entkoppelt und der Drehgeber kann besonders präzise arbeiten. Der Zahnriemen kann in ein Zahnrad an der Abtriebsseite des Motorgetriebes und in ein weiteres Zahnrad am Drehgeber eingreifen.

Der Drehgeber kann dazu ausgebildet sein, ein Grobsignal auszugeben und/oder zu verarbeiten, dessen Periode einem ganzzahligen Vielfachen der periodischen Werteinkremente entspricht. Dadurch können Störungen im Positionssignal besonders gut detektiert werden.

Eine Periode des Grobsignals kann einer Maschinenteilung entsprechen. Dadurch kann allein auf Basis des Positionssignals und des Grobsignals ein absoluter Positionswert innerhalb der Maschinenteilung ermittelt werden. Die ansteigenden oder abfallenden Signalflanken des Grobsignals können mit Referenzstellungen der Behälteraufnahmen korrespondieren.

Ein Nullpunkt des Grobsignals kann frei wählbar sein. Dadurch kann das Grobsignal besonders einfach gegenüber den tatsächlichen Positionen der Behälteraufnahmen in der Rundläufermaschine kalibriert werden. Der Nullpunkt des Grobsignals kann in dem Drehgeber oder der Signalverarbeitungseinrichtung gespeichert sein.

Die Signalverarbeitungseinrichtung kann dazu ausgebildet sein, ein Zeitfenster um die vom Signalgeber erfasste Referenzmarke zu definieren und innerhalb des Zeitfensters eine Signalflanke des Grobsignals als Nullposition des Karussells zu identifizieren. Dadurch kann die absolute Position des Karussells besonders genau erfasst werden, da als Nullposition die Signalflanke des Grobsignals dient, die genauer ist als die vom Signalgeber erfasste Referenzmarke. Für die Nullposition kann das Karussell an eine vorbestimmte Referenzposition drehbar sein.

Dadurch kann das Karussell in der Rundläufermaschine besonders einfach bei der Installation und/oder einem Service kalibriert werden.

Ein Sicherheitsdrehgeber kann zur Detektion einer sicheren Drehzahl des Karussells ausgebildet ausgebildet sein, der optional mit dem Drehgeber integriert ist. Sicherheitsdrehgeber kann bedeuten, dass der Drehgeber ein SIL-Drehgeber nach der Norm EN 61508 ist. Dadurch kann unabhängig von der korrekten Funktion des Drehgebers die Drehzahl des Karussells überwacht werden und beim Abweichen von einer erwarteten Drehzahl kann die Rundläufermaschine angehalten werden und/oder es kann ein Alarm ausgelöst werden. Dadurch kann die Rundläufermaschine besonders gut abgesichert werden. Dass der Sicherheitsdrehgeber mit dem Drehgeber integriert ist, kann bedeuten, dass der Sicherheitsdrehgeber als zusätzliche unabhängige Auswerteeinheit des Drehgebers ausgeführt ist. Alternativ kann das bedeuten, dass der Sicherheitsdrehgeber und der Drehgeber über eine gemeinsame Welle verbunden sind. Der Drehgeber kann einen elektrischen Anschluss zur Ausgabe des Positionssignals und/oder des Grobsignals umfassen und der Sicherheitsdrehgeber kann einen davon separaten elektrischen Anschluss zur Ausgabe eines Drehzahlsignals aufweisen.

Darüber hinaus stellt die Erfindung zur Lösung der Aufgabenstellung ein Verfahren nach Anspruch 13 für eine Rundläufermaschine zur Behälterbehandlung nach einem der Ansprüche 1-12 bereit. Vorteilhafte Ausführungsformen der Erfindung sind in den abhängigen Ansprüchen genannt.

Dadurch, dass sowohl die Position des Karussells als auch die Behälteraufnahmen auf Basis des Positionssignals und des Referenzmarkensignals geregelt bzw. gesteuert werden, erfolgt die Drehung des Karussells und die Bewegung der Behälteraufnahmen synchronisiert basierend auf dem Positionssignal und dem Referenzmarkensignal. Darüber hinaus wird durch die Getriebeübersetzung eine besonders hohe Auflösung der Maschinenteilung durch die periodischen Werteinkremente des Drehgebers gewährleistet. Dadurch ist das Positionssignal besonders hochauflösend. Darüber hinaus kann mithilfe der Referenzmarke am Karussell durch den Signalgeber eine absolute Position des Karussells erfasst werden und die absolute Position jeder Behälteraufnahme ermittelt werden. Dementsprechend kann die Bewegung jeder Behälteraufnahme in Abhängigkeit von ihrer momentanen Position entlang der Kreisbahn gesteuert werden.

Die zuvor beschriebenen Ausführungsformen oder Teile davon bzw. die Gegenstände der Ansprüche 2 - 12 können mit dem Gegenstand des Anspruchs 13 bzw. mit den nachfolgenden Ausführungsformen kombiniert werden.

Der Drehgeber kann ein Grobsignal ausgeben, dessen Signalflanken mit Referenzpositionen der Behälteraufnahmen korrespondieren. Dadurch ist die Position der Behälteraufnahmen bei den Referenzpositionen besonders genau ermittelbar.

Innerhalb eines Zeitfensters um die vom Signalgeber erfasste Referenzmarke herum kann eine Signalflanke des Grobsignals als Nullposition des Karussells identifiziert werden. Dadurch kann eine besonders genaue Nullposition des Karussells ermittelt werden.

Merkmale und Vorteile der Erfindung werden nachfolgend anhand der in den Figuren dargestellten Ausführungsbeispiele erläutert. Dabei zeigt:
- Fig. 1: eine seitliche Darstellung einer Rundläufermaschine;
- Fig. 2: eine schematische Draufsicht der Rundläufermaschine aus Fig. 1;
- Fig. 3: eine schematische Signaldarstellung des Positionssignals, des Referenzmarkensignals und des Grobsignals innerhalb einer Maschinenteilung; und
- Fig. 4: eine Schnittdarstellung eines Zahnriemens für die Rundläufermaschine aus Fig. 1.

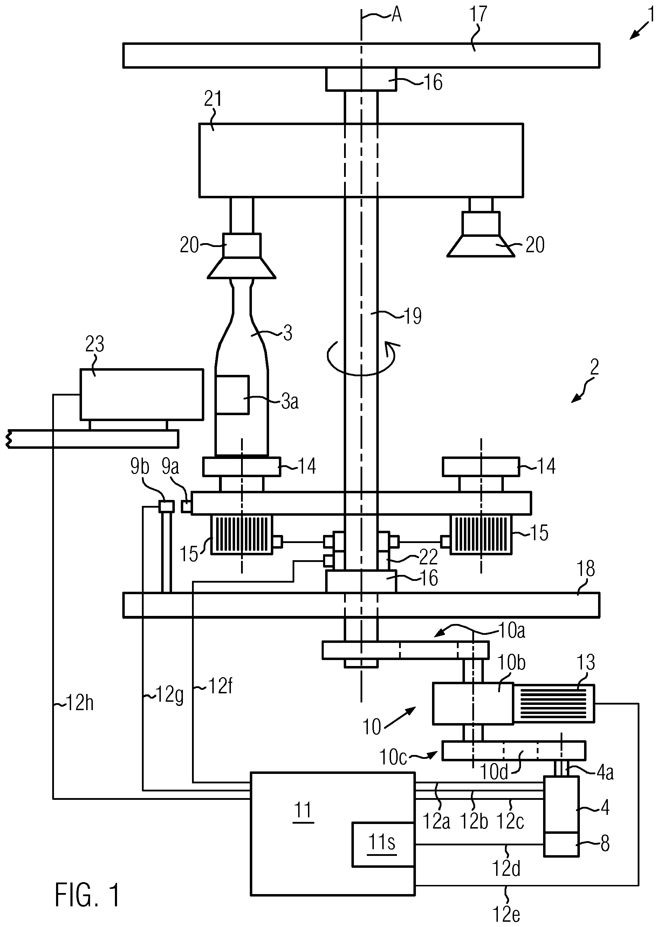

Fig. 1 zeigt in einer seitlichen Darstellung eine Rundläufermaschine 1. Zu sehen ist ein Karussell 2, das drehtellerartig ausgebildet ist und an dessen Umfang die Behälteraufnahmen 14 angeordnet sind. Die Behälteraufnahmen werden dabei von den Servomotoren 15 bewegt. Das Karussell 2 umfasst eine Welle 19, die an den beiden Enden mit den Lagern 16 an dem oberen und unteren Rahmenelement 17 bzw. 18 drehbar gelagert ist. Mit jeder Behälteraufnahme 14 kann jeweils ein Behälter 3 lagefest aufgenommen werden und über die Servomotoren 15 geschwenkt werden. Die Behälter 3 sind dabei am oberen Ende über die Fixierelemente 20 gegen eine Verschiebung gesichert. Die Fixierelemente 20 sind dabei in der Kopfplatte 21 verschiebbar gelagert und mit der Welle 19 verbunden. Dabei korrespondiert während der Drehung des Karussells 2 jedes Fixierelement 20 mit der entsprechenden Behälteraufnahme 14.

Als Antrieb des Karussells 2 ist der Motor 13 vorgesehen. Dabei wird die Drehzahl des Motors 13 durch das Motorgetriebe 10b in eine niedrigere Drehzahl auf der Abtriebsseite des Motorgetriebes 10b untersetzt. Die Abtriebsseite des Motorgetriebes 10b ist über das erste Teilgetriebe 10a mit der Welle 19 des Karussells 2 verbunden. Durch das erste Teilgetriebe 10a wird die Drehzahl der Abtriebsseite des Motorgetriebes 10b weiter untersetzt. Das erste Teilgetriebe 10a umfasst dabei ein erstes Zahnrad an der Abtriebsseite des Motorgetriebes 10b, ein demgegenüber größeres Zahnrad an der Welle 19 des Karussells 2 und einen Zahnriemen, der beide Zahnräder verbindet. Alternativ können die beiden Zahnräder auch direkt ineinander eingreifen.

Darüber hinaus ist zu sehen, dass die Behälter 3 mit dem Etikettieraggregat 23 mit Etiketten 3a versehen werden. Für eine hohe Präzision bei der Etikettierung ist eine genaue Positionierung der Behälter 3 gegenüber dem Etikettieraggregat 23 erforderlich. Dies wird im Folgenden beschrieben:

Zur genauen Positionsermittlung sind das Karussell 2 und der Drehgeber 4 über das Getriebe 10 verbunden. Hierbei umfasst das Getriebe 10 das zuvor beschriebene erste Teilgetriebe 10a, das Motorgetriebe 10b und das an der zweiten Abtriebsseite verbundene zweite Teilgetriebe 10c. Das zweite Teilgetriebe 10c umfasst dabei ein erstes Zahnrad, das mit der zweiten Abtriebsseite des Motorgetriebes 10b verbunden ist, ein zweites Zahnrad, das mit der Welle 4a des Drehgebers 4 verbunden ist und einen Zahnriemen 10d, der beide verbindet. Das zweite Teilgetriebe 10c kann mit oder ohne Übersetzung ausgeführt sein. Das erste Teilgetriebe 10a, das Motorgetriebe 10b und das zweite Teilgetriebe 10c weisen zusammen ein Übersetzungsverhältnis auf, so dass eine Maschinenteilung des Karussells 2 einer Vollumdrehung der Welle 4a am Drehgeber 4 entspricht. Der Drehgeber 4 ist hier als optischer Drehgeber ausgebildet, der pro Umdrehung der Welle 4a genau 5000 Perioden eines periodischen Werteinkrements als Positionssignal ausgibt. Folglich entspricht eine Drehung des Karussells 2 um eine Maschinenteilung genau 5000 periodischer Werteinkremente des Drehgebers 4. Hierdurch ist eine besonders hohe Auflösung der Bewegung des Karussells 2 möglich. Der Drehgeber 4 gibt das Positionssignal an der elektrischen Leitung 12a als Rechtecksignal an die Signalverarbeitungseinrichtung 11 aus. Alternativ kann dies auch ein Sinussignal sein.

Darüber hinaus ist der Drehgeber 4 dazu ausgebildet, ein Grobsignal auszugeben, wobei eine Periode des Grobsignals einer vollen Umdrehung der Drehachse 4a des Drehgebers entspricht. Das Grobsignal ist ebenfalls ein Rechtecksignal, das hier an der elektrischen Leitung 12b ausgegeben wird. Dabei entspricht eine erste halbe Periode genau einer halben Umdrehung des Drehgebers 4 bzw. 2500 Werteinkrementen. Die zweite Halbperiode des Grobsignals entspricht der zweiten Halbdrehung des Drehgebers 4 bzw. weiteren 2500 Werteinkrementen des Positionssignals.

Zur Energieversorgung des Drehgebers 4 ist darüber hinaus die Leitung 12c gezeigt.

Mit dem Drehgeber 4 integriert ist ein Sicherheitsdrehgeber 8 gezeigt. Dieser erfasst eine sichere Drehzahl des Karussells 2 und gibt diese an einer separaten Leitung 12d aus. Hiermit kann die Drehung des Karussells 2 überwacht werden. Dies erfolgt hier durch die Überwachungseinrichtung 11_{S}, die die sichere Drehzahl mit einer erwarteten Drehzahl vergleicht. Bei einer Differenz wird die Rundläufermaschine 1 gestoppt und ein Alarm ausgelöst.

Darüber hinaus ist der Signalgeber 9b gezeigt, der die Referenzmarke 9a am Karussell 2 erfasst. Die Referenzmarke 9a ist hier als Magnet ausgebildet, der mit einem Magnetschalter im Signalgeber 9b detektiert wird. Sobald die Referenzmarke 9a dem Signalgeber 9b gegenübersteht, gibt dieser einen Spannungsimpuls als Signal über die Leitung 12g ab.

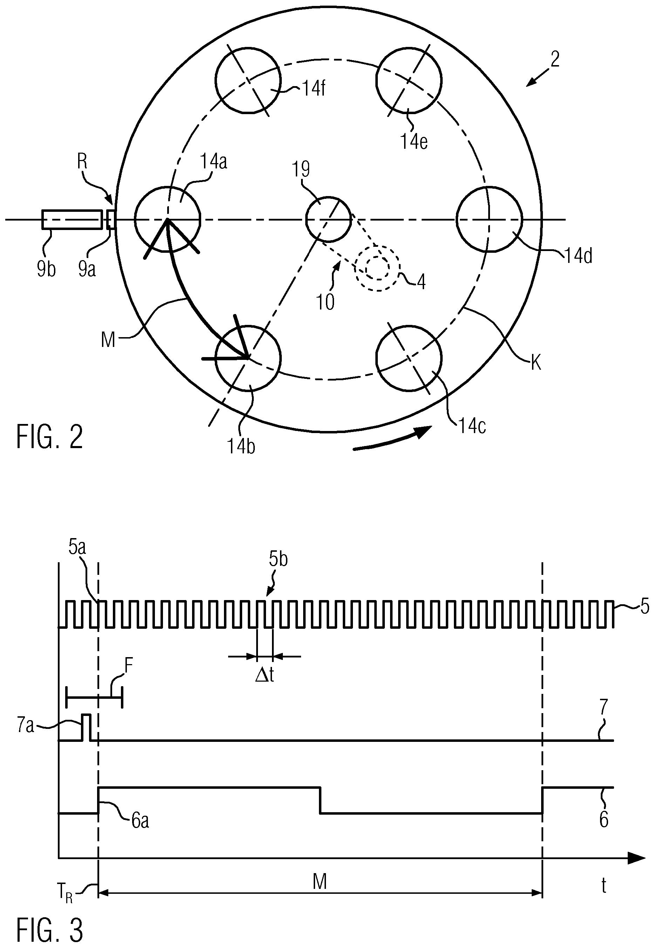

Die zuvor beschriebenen Signale werden von der Signalverarbeitungseinrichtung 11 erfasst. Diese ist mit einem Mikroprozessor und digitalen Eingängen zur Erfassung der Signale an den Leitungen 12a, 12b und 12g ausgebildet. Dabei werden die Signale, wie nachfolgend in Bezug auf Fig. 3 beschrieben, mit der Signalverarbeitungseinrichtung 11 verarbeitet, um eine absolute Position des Karussells 2 mit hoher Auflösung zu berechnen. Mit dieser absoluten Position des Karussells 2 werden dann der Motor 13 zum Antrieb des Karussells 2, die Servomotoren 15 zur Bewegung der Behälteraufnahmen 14 und das Etikettieraggregat 23 geregelt bzw. gesteuert. Da diese drei Einheiten auf Basis einer gemeinsamen Zeitbasis, nämlich der absoluten Position des Karussells 2 gesteuert bzw. geregelt werden, ist eine besonders genaue Etikettierung der Behälter 3 mit den Etiketten 3a möglich.

Die Ansteuerung des Motors 13 erfolgt dabei über die Leitungen 12e mit einer pulsweiten Steuerung. Das Etikettieraggregat 23 umfasst eine eigene Steuervorrichtung, die über die Leitung 12h zeitlich genau getriggert wird. Darüber hinaus sind die Servomotoren 15 über den Drehverteiler 22 und die Leitung 12f mit der Signalverarbeitungseinrichtung 11 verbunden. Hierbei umfasst die Signalverarbeitungseinrichtung 11 eine Regelschleife für jeden Servomotor 15, die wiederum eigene Drehgeber (hier nicht dargestellt) zur genauen Regelung der Schwenkung der Behälteraufnahmen 14 umfassen.

In Fig. 2 ist in einer Draufsicht die Rundläufermaschine 1 aus der Fig. 1 zu sehen. Zu sehen ist hierbei das Karussell 2, das sechs Behälteraufnahmen 14a - 14f umfasst. Diese sind gleichmäßig entlang der Kreisbahn K angeordnet und folglich entspricht eine Maschinenteilung M genau 60 Grad. Zu sehen ist auch die Nullposition R des Karussells 2, wobei hier die Referenzmarke 9a dem Signalgeber 9b genau gegenübersteht. Für diese Nullposition R befinden sich die Behälteraufnahmen 14a - 14f an den Positionen 0°, 60°, 120°, 180°, 240° und 360. Die Drehlagen jeder Behälteraufnahme 14a - 14f in Bezug auf die Position des Karussells 2 können als Kurven in der Signalverarbeitungseinrichtung 11 abgespeichert werden, wobei mit jeder Kurve die Drehlage einer bestimmten Behälteraufnahme 14a - 14f mit der Position des Karussells 2 korreliert ist.

Darüber hinaus ist zu sehen, dass die Welle 19 des Karussells 2 über das Getriebe 10 mit dem Drehgeber 4 verbunden ist (hier nur schematisch gezeigt).

In Fig. 3 sind in einer schematischen Darstellung das Positionssignal 5, das Referenzmarkensignal 7 und das Grobsignal 6 als Zeitverlauf über die Zeit t innerhalb einer Maschinenteilung M gezeigt.

Zu sehen ist, dass das Grobsignal 6 ein Rechtecksignal ist, das innerhalb einer Maschinenteilung M ab dem Referenzzeitpunkt T_{R} genau eine Periode durchläuft. Darüber hinaus korrespondiert der Referenzzeitpunkt T_{R} mit der in Fig. 2 gezeigten Nullposition R des Karussells 2. Der Nullpunkt des Grobsignals 6 ist dabei die positive Signalflanke 6a und ist so gewählt, dass diese der Nullposition des Karussells 2 (sieh Fig. 2) entspricht.

Das Positionssignal 5 ist hier ebenfalls ein Rechtecksignal, kann alternativ aber auch ein Sinussignal sein. Hierbei durchläuft das Positionssignal 5 während einer Maschinenteilung M genau 5000 Perioden. Dies können entsprechend der Ausbildung der Rundläufermaschine auch 2000, 1000, 500, 100 oder 10 Perioden sein. Die Anzahl der Perioden des Positionssignals 5 ist hier lediglich schematisch dargestellt, um die Korrelation der einzelnen Signale besser darzustellen. Zu sehen ist, dass das Positionssignal 5 die periodischen Werteinkremente 5b aufweist, die während der Zeitspanne Δt genau eine Periode durchlaufen. Ebenso zu sehen ist, dass der Nullpunkt des Positionssignals 5 die Signalflanke 5a ist und so gewählt ist, dass diese der Nullposition R des Karussells 2 (siehe Fig. 2) entspricht. Dementsprechend erfolgt die positive Signalflanke 5a des Positionssignals 5 genau zum Referenzzeitpunkt T_{R}. Ebenfalls zu sehen ist, dass eine Periode des Grobsignals 6 einem ganzzahligen Vielfachem der periodischen Werteinkremente 5b des Positionssignals 5 entspricht.

Darüber hinaus ist das Referenzmarkensignal 7 gezeigt, das vom Signalgeber 9b abgegeben wird, wenn bei der Nullposition R die Referenzmarke 9a dem Signalgeber 9b gegenübersteht. Hierbei ist der Signalgeber 9b besonders einfach mit einem Magnetschalter ausgeführt, wobei durch Produktionstoleranzen der Signalimpuls 7a des Referenzmarkensignals 7 innerhalb des Fensters F erfolgt. Würde nun das Referenzmarkensignal 7 direkt für ein absolutes Positionssignal des Karussells 2 herangezogen, so wäre die tatsächliche Position des Karussells 2 innerhalb des Fensters f relativ ungenau bekannt. Dementsprechend wird mit der Signalverarbeitungseinrichtung innerhalb des Fensters F die ansteigende Signalflanke 6a des Grobsignals 6 als Nullposition R des Karussells 2 identifiziert. Anschließend wird das absolute Positionssignal für das Karussell 2 aus dem Grobsignal 6 und dem Positionssignal 5 beispielsweise durch Integration der Werteinkremente 5b ab dem Referenzzeitpunkt T_{R} gebildet. Hierdurch wird einerseits der Vorbeilauf der Behälteraufnahme 14a erfasst und gleichzeitig eine besonders genaue Absolutposition des Karussells 2 ermittelt.

Durch das besonders genau und hochauflösend erfasste Positionssignal 5 und durch die in Verbindung mit dem Grobsignal 6 und dem Referenzmarkensignal 7 ermittelte absolute Position des Karussells 2 können die Drehung des Karussells 2, die Schwenkung der Behälteraufnahmen 14 und das Etikettieraggregat 23 besonders hochauflösend und genau geregelt bzw. gesteuert werden, da dies basierend auf einer gemeinsamen Zeitbasis erfolgt.

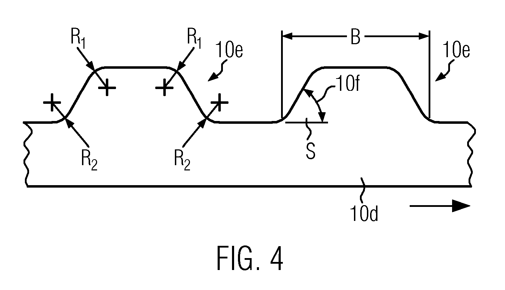

In Fig. 4 ist der Zahnriemen 10d der Rundläufermaschine 1 aus den Figuren 1 und 2 in einer Schnittdarstellung gezeigt. Zu sehen ist, dass der Zahnriemen 10d abgerundete Zähne 10e aufweist.

Jeder Zahn 10e weist dabei die abgerundeten Radien R1, R2 auf, durch die der Zahnriemen 10d leichter in die damit korrespondierenden Zahnräder des Teilgetriebes 10c (hier nicht dargestellt) eingreifen. Die Radien R1, R2 sind dabei kleiner als die Hälfte der Breite B jedes Zahns. Optional sind die Radien R1, R2 kleiner als ein Viertel der Breite des Zahns 10e. Darüber hinaus ist zu sehen, dass die seitlichen Flanken 10f der Zähne 10e eine Schräge 10f aufweisen, die mit dem Winkel S gegenüber der Laufrichtung (durch den Pfeil gekennzeichnet) geneigt sind. Der Winkel S ist hierbei in einem Bereich von 60 Grad bis 90 Grad, optional in einem Bereich von 70 Grad - 80 Grad. Dadurch können die Zähne 10e noch einfacher in die damit korrespondierenden Zahnräder des Teilgetriebes 10c eingreifen.

Mit der in den Fig. 1 - 4 dargestellten Rundläufermaschine 1 können die Verfahren entsprechend der Ansprüche 13 - 15 durchgeführt werden.

Es versteht sich, dass in den zuvor beschriebenen Ausführungsbeispielen genannte Merkmale nicht auf diese speziellen Kombinationen beschränkt sind und in beliebigen anderen Kombinationen möglich sind, wobei der Gegenstand der Erfindung allein durch die folgenden Ansprüche definiert wird.

## Patentansprüche

1. Rundläufermaschine (1) zur Behälterbehandlung, umfassend ein Karussell (2) mit Behälteraufnahmen (14) zur Förderung von Behältern (3), wobei die Behälteraufnahmen (14) entlang einer Kreisbahn (K) um eine Drehachse (A) des Karussells (2) mit einer Maschinenteilung (M) regelmäßig beabstandet angeordnet sind,
wobei das Karussell (2) und ein Drehgeber (4) über ein Getriebe (10) derart verbunden sind, dass bei einer Drehung des Karussells (2) um eine Maschinenteilung (M) der Drehgeber als Positionssignal (5) ein ganzzahliges Vielfaches eines periodischen Werteinkrements (5b) ausgibt und/oder verarbeitet,
**dadurch gekennzeichnet, dass**
ein Signalgeber (9b) zur Erfassung einer Referenzmarke (9a) am Karussell (2) und zur Ausgabe eines darauf basierenden Referenzmarkensignals (7) ausgebildet ist und
eine Signalverarbeitungseinrichtung (11) zur Verarbeitung des Positionssignals (5) und des Referenzmarkensignals (7) ausgebildet ist, um die Position des Karussells (2) zu regeln und die Behälteraufnahmen (14) zu steuern.

2. Rundläufermaschine (1) nach Anspruch 1, wobei die Signalverarbeitungseinrichtung (11) zur Verarbeitung des Positionssignals (5) ausgebildet ist, um ein Aggregat (23) zur Behälterbehandlung zu steuern.

3. Rundläufermaschine (1) nach Anspruch 1 oder 2, wobei ein Nullpunkt (5a) des Positionssignals (5) frei wählbar ist.

4. Rundläufermaschine (1) nach wenigstens einem der vorangegangenen Ansprüche, wobei das Getriebe (10) ein derartiges Untersetzungsverhältnis aufweist, dass sich bei einer Drehung des Karussells (2) um eine Maschinenteilung (M) eine Welle (4a) des Drehgebers (4) um eine, zwei, vier oder eine halbe oder eine viertel Umdrehung dreht.

5. Rundläufermaschine nach wenigstens einem der vorangegangenen Ansprüche, wobei das Getriebe (10) einen Zahnriemen (10d) mit abgerundeten Zähnen (10e) aufweist.

6. Rundläufermaschine nach wenigstens einem der vorangegangenen Ansprüche, wobei das Getriebe (10) ein Motorgetriebe (10b) umfasst, das an einer Antriebsseite mit einem Motor (13) zur Einleitung einer Antriebskraft gekoppelt ist und das an einer Abtriebsseite zwischen dem Drehgeber (4) und dem Karussell (2) angeordnet ist.

7. Rundläufermaschine nach Anspruch 5 und 6, wobei der Zahnriemen (10d) zwischen dem Motorgetriebe (10b) und dem Drehgeber (4) angeordnet ist.

8. Rundläufermaschine (1) nach wenigstens einem der vorangegangenen Ansprüche, wobei der Drehgeber (4) dazu ausgebildet ist, ein Grobsignal (6) auszugeben und/oder zu verarbeiten, dessen Periode einem ganzzahligen Vielfachen der periodischen Werteinkremente (5b) entspricht.

9. Rundläufermaschine (1) nach Anspruch 8, wobei eine Periode des Grobsignals (6) einer Maschinenteilung (M) entspricht.

10. Rundläufermaschine (1) nach Anspruch 8 oder 9, wobei ein Nullpunkt (6a) des Grobsignals (6) frei wählbar ist.

11. Rundläufermaschine (1) nach wenigstens einem der vorangegangenen Ansprüche 8 - 10, wobei die Signalverarbeitungseinrichtung (11) dazu ausgebildet ist, ein Zeitfenster (F) um die vom Signalgeber (9b) erfasste Referenzmarke (9a) zu definieren und innerhalb des Zeitfensters (F) eine Signalflanke (6a) des Grobsignals als Nullposition (R) des Karussells (2) zu identifizieren.

12. Rundläufermaschine (1) nach wenigstens einem der vorangegangenen Ansprüche, wobei ein Sicherheitsdrehgeber (8) zur Detektion einer sicheren Drehzahl des Karussells (2) ausgebildet ist, der optional mit dem Drehgeber (4) integriert ist.

13. Verfahren für eine Rundläufermaschine (1) zur Behälterbehandlung nach einem der Ansprüche 1 - 12, wobei Behälter (3) in Behälteraufnahmen (14) transportiert werden, die entlang einer Kreisbahn (K) um eine Drehachse (A) des Karussells (2) mit einer Maschinenteilung (M) regelmäßig beabstandet angeordnet sind und ein Drehgeber (4) zur Positionsbestimmung des Karussells (2) ein Positionssignal (5) mit periodischen Werteinkrementen (5b) verarbeitet und/oder ausgibt,
wobei ein Getriebe (10) die Maschinenteilung (M) des Karussells (2) in ein ganzzahliges Vielfaches der periodischen Werteinkremente (5b) des Drehgebers (4) übersetzt,
**dadurch gekennzeichnet, dass**
ein Signalgeber (9b) eine Referenzmarke (9a) am Karussell (2) erfasst und darauf basierend ein Referenzmarkensignal (7) ausgibt und
eine Signalverarbeitungseinrichtung (11) das Positionssignal (5) und das Referenzmarkensignals (7) verarbeitet, um die Position des Karussells (2) zu regeln und die Behälteraufnahmen (14) zu steuern.

14. Verfahren nach Anspruch 13, wobei der Drehgeber (4) ein Grobsignal (6) ausgibt, dessen Signalflanken (6a) mit Referenzpositionen der Behälteraufnahmen (14) korrespondieren.

15. Verfahren nach Anspruch 14, wobei innerhalb eines Zeitfensters (F) um die vom Signalgeber (9b) erfasste Referenzmarke (9a) herum eine Signalflanke (6a) des Grobsignals (6) als Nullposition (R) des Karussells (2) identifiziert wird.

## Claims

1. Rotary table machine (1) for container treatment, comprising a carousel (2) with container receptacles (14) for conveying containers (3), wherein the container receptacles (14) are arranged at a regular spacing along a circular path (K) about an axis of rotation (A) of the carousel (2) by means of a machine pitch (M),
wherein the carousel (2) and a rotary transducer (4) are connected via a transmission (10) such that, when the carousel (2) rotates about a machine pitch (M), the rotary transducer emits and/or processes a whole-number multiple of a periodic value increment (5b) as a position signal (5),
**characterized in that**
a signal transmitter (9b) is designed to detect a reference mark (9a) on the carousel (2) and to emit a reference mark signal (7) on the basis thereof, and
a signal processing device (11) is designed to process the position signal (5) and the reference mark signal (7) in order to regulate the position of the carousel (2) and control the container receptacles (14).

2. Rotary table machine (1) according to claim 1, wherein the signal processing device (11) is designed to process the position signal (5) in order to control a unit (23) for container treatment.

3. Rotary table machine (1) according to claim 1 or 2, wherein a zero point (5a) of the position signal (5) is freely selectable.

4. Rotary table machine (1) according to at least one of the preceding claims, wherein the transmission (10) has such a reduction ratio that, when the carousel (2) rotates about a machine pitch (M), a shaft (4a) of the rotary transducer (4) rotates about one, two or four revolutions, or about half a revolution or a quarter revolution.

5. Rotary table machine according to at least one of the preceding claims, wherein the transmission (10) comprises a sprocket belt (10d) with rounded teeth (10e).

6. Rotary table machine according to at least one of the preceding claims, wherein the transmission (10) comprises a motor control gear (10b) which is coupled, at a driving end, with a motor (13) for introducing a driving force, and which is arranged, at a driven end, between the rotary transducer (4) and the carousel (2).

7. Rotary table machine according to claims 5 and 6, wherein the sprocket belt (10d) is arranged between the motor control gear (10b) and the rotary transducer (4).

8. Rotary table machine (1) according to at least one of the preceding claims, wherein the rotary transducer (4) is designed to emit and/or process a coarse signal (6) whose period corresponds to a whole-number multiple of the periodic value increments (5b).

9. Rotary table machine (1) according to claim 8, wherein a period of the coarse signal (6) corresponds to one machine pitch (M).

10. Rotary table machine (1) according to claim 8 or 9, wherein a zero point (6a) of the coarse signal (6) is freely selectable.

11. Rotary table machine (1) according to at least one of the preceding claims 8 - 10, wherein the signal processing device (11) is designed to define a time slot (F) around the reference mark (9a) detected by the signal transmitter (9b) and to identify, within the time slot (F), a signal edge (6a) of the coarse signal as zero position (R) of the carousel (2).

12. Rotary table machine (1) according to at least one of the preceding claims, wherein a safety rotary transducer (8) is designed to detect a safe speed of the carousel (2) which is optionally integrated with the rotary transducer (4).

13. Method for a rotary table machine (1) for container treatment according to one of the claims 1 - 12, wherein containers (3) are transported in container receptacles (14) which are arranged at a regular spacing along a circular path (K) about an axis of rotation (A) of the carousel (2) by means of a machine pitch (M), and a rotary transducer (4) for determining the position of the carousel (2) processes and/or emits a position signal (5) with periodic value increments (5b),
wherein a transmission (10) translates the machine pitch (M) of the carousel (2) into a whole-number multiple of the periodic value increments (5b) of the rotary transducer (4),
**characterized in that**
a signal transmitter (9b) detects a reference mark (9a) at the carousel (2) and emits a reference mark signal (7) on the basis thereof, and
a signal processing device (11) is designed to process the position signal (5) and the reference mark signal (7) to regulate the position of the carousel (2) and control the container receptacles (14).

14. Method according to claim 13, wherein the rotary transducer (4) emits a coarse signal (6) whose signal edges (6a) correspond to reference positions of the container receptacles (14).

15. Method according to claim 14, wherein within a time slot (F) around the reference mark (9a) detected by the signal transmitter (9b), a signal edge (6a) of the coarse signal (6) is identified as zero position (R) of the carousel (2).

## Revendications

1. Machine rotative (1) pour le traitement de récipients, comprenant un carrousel (2) avec des réceptacles de récipients (14) pour le transport de récipients (3), les réceptacles de récipients (14) étant disposés à intervalles réguliers le long d'une trajectoire circulaire (K) autour d'un axe de rotation (A) du carrousel (2) avec un pas de machine (M), dans lequel le carrousel (2) et un codeur rotatif (4) sont reliés par un engrenage (10) de telle manière que, lorsque le carrousel (2) tourne d'un pas de machine (M), le codeur rotatif émet et/ou traite comme signal de position (5) un multiple entier d'un incrément de valeur périodique (5b),
**caractérisé en ce que**
un émetteur de signaux (9b) est conçu pour détecter une marque de référence (9a) sur le carrousel (2) et pour émettre un signal de marque de référence (7) fondé sur celle-ci, et
le moyen de traitement du signal (11) est conçu pour traiter le signal de position (5) et le signal de marque de référence (7) afin de contrôler la position du carrousel (2) et de commander les supports de récipients (14).

2. Machine rotative (1) selon la revendication 1, dans laquelle le moyen de traitement du signal (11) est conçu pour traiter le signal de position (5) afin de commander un agrégat de manutention de récipients (23).

3. Machine rotative (1) selon les revendications 1 ou 2, dans laquelle un point zéro (5a) du signal de position (5) est librement sélectionnable.

4. Machine rotative (1) selon au moins une des revendications précédentes, dans laquelle l'engrenage (10) présente un rapport de réduction tel que, lorsque le carrousel (2) tourne d'un pas de machine (M), un arbre (4a) du codeur rotatif (4) tourne d'un, deux, quatre ou un demi ou un quart de tour.

5. Machine rotative selon au moins une des revendications précédentes, dans laquelle la transmission (10) comprend une courroie dentée (10d) avec des dents arrondies (10e).

6. Machine rotative selon au moins une des revendications précédentes, dans laquelle la transmission (10) comprend une transmission de moteur (10b) qui est couplée à un moteur (13) du côté de l'entrée pour introduire une force d'entraînement et qui est disposée du côté de la sortie entre le codeur rotatif (4) et le carrousel (2).

7. Machine rotative selon les revendications 5 et 6, dans laquelle la courroie dentée (10d) est disposée entre l'engrenage moteur (10b) et le codeur rotatif (4).

8. Machine rotative (1) selon au moins une des revendications précédentes, dans laquelle le codeur rotatif (4) est conçu pour émettre et/ou traiter un signal grossier (6) dont la période correspond à un multiple entier des incréments de valeur périodiques (5b).

9. Machine rotative (1) selon la revendication 8, dans laquelle une période du signal grossier (6) correspond à un pas de machine (M).

10. Machine rotative (1) selon la revendication 8 ou 9, dans laquelle un point zéro (6a) du signal grossier (6) est librement sélectionnable.

11. Machine rotative (1) selon au moins une des revendications précédentes 8 à 10, dans lequel le dispositif de traitement du signal (11) est adapté pour définir une fenêtre temporelle (F) autour du repère de référence (9a) détecté par le générateur de signaux (9b) et pour identifier dans la fenêtre temporelle (F) un front de signal (6a) du signal grossier comme étant la position zéro (R) du carrousel (2).

12. Machine rotative (1) selon au moins une des revendications précédentes, dans laquelle un codeur de sécurité (8) est conçu pour détecter une vitesse de rotation sûre du carrousel (2), qui est éventuellement intégré au codeur (4).

13. Procédé pour une machine rotative (1) pour le traitement de récipients selon l'une des revendications 1 à 12, dans lequel des récipients (3) sont transportés dans des réceptacles à récipients (14) qui sont disposés à intervalles réguliers le long d'une trajectoire circulaire (K) autour d'un axe de rotation (A) du carrousel (2) avec un pas de machine (M) et un codeur rotatif (4) pour déterminer la position du carrousel (2) traite et/ou émet un signal de position (5) avec des incréments de valeur périodiques (5b),
dans lequel un engrenage (10) traduit le pas machine (M) du carrousel (2) en un multiple entier des incréments de valeur périodiques (5b) du codeur rotatif (4),
**caractérisé en ce que**
un émetteur de signaux (9b) détecte une marque de référence (9a) sur le carrousel (2) et, sur cette base, émet un signal de marque de référence (7) et
un moyen de traitement du signal (11) traite le signal de position (5) et le signal de marque de référence (7) pour contrôler la position du carrousel (2) et pour contrôler les porte-récipients (14).

14. Procédé selon la revendication 13, dans lequel le codeur rotatif (4) émet un signal grossier (6) dont les flancs de signal (6a) correspondent à des positions de référence des réceptacles de récipient (14).

15. Procédé selon la revendication 14, dans lequel, dans une fenêtre temporelle (F) autour de la marque de référence (9a) détectée par l'émetteur de signal (9b), un front de signal (6a) du signal grossier (6) est identifié comme la position zéro (R) du carrousel (2).
